# EUROPEAN PATENT APPLICATION

(11) **EP 1 325 835 A2**
(43) Date of publication of application: **09.07.2003**
(21) Application number: 02029090.4
(22) Date of filing: 30.12.2002
(51) Int. Cl.: B60N 2/24

(54) **Bench for a vehicle, in particular an industrial vehicle**

(30) Priority: 08.01.2002 IT TO20020004 U
(71) Applicant: Selmat Automotive S.p.A., 10090 Cascine Vica - Rivoli (IT)
(72) Inventor: Maccherrone, Michele, 10090 Rosta (IT)
(74) Representative: Jorio, Paolo

(57) **Abstract**

A bench (7) for a vehicle (1), in particular an industrial vehicle, has a seat portion (11), and at least two uprights (12) for supporting the seat portion (11) off a floor (8) of the vehicle (1); the seat portion (11) and the uprights (12) are defined by respective panels (13), each having at least one edge (14) hinged to the edge (14) of an adjacent panel (13) by a flexible portion (25) of a sheet of covering material (24) enabling the panels (13) to be set to a first configuration (26), in which they lie in parallel planes, and to a second configuration, in which they lie in transverse planes to define the assembled bench (7).

## Description

The present invention relates to a bench for a vehicle, in particular an industrial vehicle.

As is known, in industrial vehicles, the passenger compartment area behind the seats is furnished, e.g. with benches or seats, folding or pull-out tables, a bunk, cabinets, etc., to make the area relatively comfortable as well as functional.

More specifically, known benches or seats are parallelepiped- or cube-shaped, and each comprise a seat portion and at least two uprights defined by respective rectangular or square panels. The panels are made separately, and are only fitted together in fixed relative positions, by means of connecting members such as brackets, screws and hooks, when fitting the bench to the vehicle by fixing the panels to the floor and/or lateral walls of the vehicle.

Known benches of the above type are unsatisfactory by comprising a large number of component parts, so that a good deal of time and cost is involved in positioning the panels and fitting the component parts together.

When fitting the bench to the vehicle, in fact, each panel must be positioned with respect to the fastening points in the passenger compartment, as well as with respect to the other panels. Moreover, the screws, brackets and other connecting members are relatively small, and must normally be picked out one by one from boxes or bags in which they are packed loosely, thus increasing the time taken to procure the connecting members and, hence, assemble the bench.

Moreover, to supply the component parts of the bench to the on-vehicle fitter, additional time, space, and cost is involved in checking the packaging to ensure none of the parts have been lost during transport.

It is an object of the present invention to provide a bench for a vehicle, in particular an industrial vehicle, designed to provide a straightforward, low-cost solution to the aforementioned problems.

According to the present invention, there is provided a bench for a vehicle, in particular an industrial vehicle; the bench comprising a supporting surface, and at least two uprights for supporting said supporting surface off a floor of said vehicle; and said supporting surface and said uprights being defined by respective panels, each having at least one edge placed alongside the edge of an adjacent panel to define an edge of said bench; characterized in that each said panel is joined to said adjacent panel by relatively mobile means for setting said panels to a first functional configuration, in which they lie at least partly in respective parallel planes, and to a second functional configuration, in which they lie in respective transverse planes to define the assembled said bench.

A non-limiting embodiment of the invention will be described by way of example with reference to the accompanying drawings, in which:
Figure 1 shows a schematic view in perspective of a preferred embodiment of the bench for a vehicle, in particular an industrial vehicle, according to the present invention;
Figure 2 shows a view in perspective of the Figure 1 bench in a first configuration prior to on-vehicle assembly;
Figure 3 shows a larger-scale detail of Figure 2;
Figure 4 shows a schematic, top-plan view in perspective of the Figure 1 bench, with parts removed for clarity.

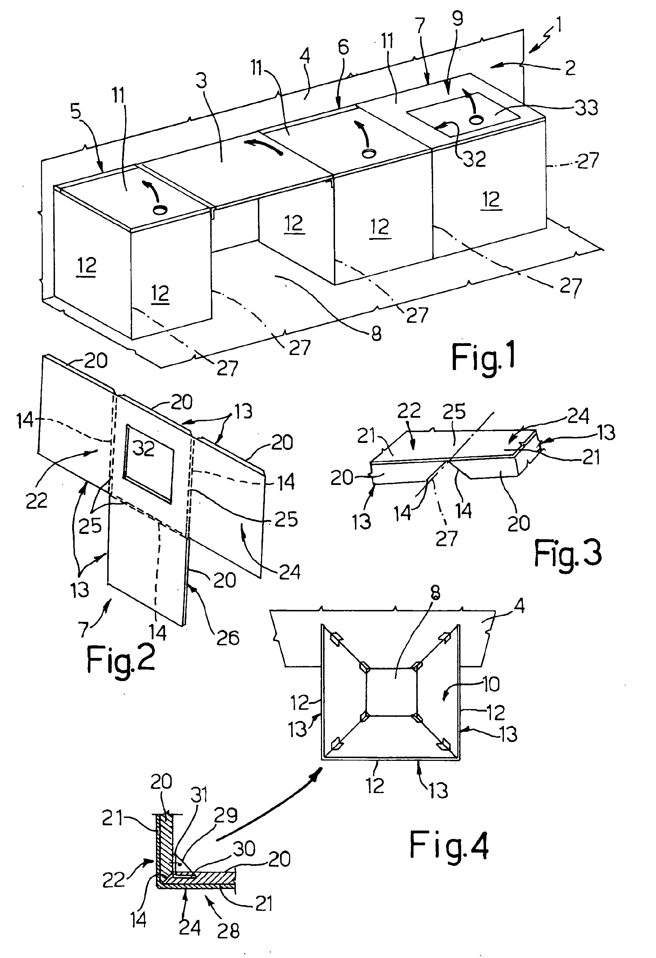

Number 1 in Figure 1 indicates as a whole a vehicle, in particular an industrial vehicle, to which the following description refers purely by way of example. Vehicle 1 comprises a passenger compartment 2, an area of which, behind the seats (not shown), is fitted with a number of furnishing items, in particular a table 3 hinged to a vertical wall 4, and a number of benches 5, 6, 7 resting on a floor 8 and aligned with one another and with table 3 to form, as a whole, a supporting surface 9 for a bunk.

With reference to Figures 1 and 2, each bench 5, 6, 7 is parallelepiped- or cube-shaped, defines a storage compartment 10 inside (Figure 4), and comprises a seat portion 11, and at least two uprights 12 for supporting seat portion 11 vertically off floor 8.

In the following description, reference is made to bench 7, it being understood that the same observations also apply to benches 5, 6. With reference to Figures 2, 3 and 4, seat portion 11 and uprights 12 of bench 7 are defined by respective panels 13, each of which is 10 to 20 millimeters thick, and has at least one beveled edge 14 placed alongside the edge 14 of an adjacent panel 13 to define an edge of bench 7. Each panel 13 comprises a substantially quadrangular plate 20 preferably made of injection molded plastic material, or self-supporting polypropylene foam, or rigid or self-supporting polyurethane foam (the term "self-supporting" normally being intended to mean a material of over roughly 45 kg/m³ density).

Panels 13 also comprise respective coverings 21 covering plates 20 to define an outer surface 22 of bench 7, and which form part of a single sheet 24 of attractive material for making bench 7 pleasing to the touch - preferably cloth, nonwoven fabric, carpet-like material, or imitation leather.

With reference to Figures 2 and 3, each panel 13 has an edge 14 joined to edge 14 of an adjacent panel 13 by a flexible portion 25 of sheet 24 to form a single member 26 comprising all of panels 13 and made, in particular, by bonding plates 20 to sheet 24, or, preferably, by co-molding the material of plates 20 to the previously formed sheet 24.

Each flexible portion 25 defines a virtual hinge enabling the two adjacent panels 13 to rotate with respect to each other about an axis 27 coincident with an edge of bench 7, and so enabling member 26 to be set to a first configuration, in which panels 13 lie in respective parallel planes prior to being fitted to vehicle 1 (Figure 2), and a second configuration, in which panels 13 lie in respective transverse planes to define bench 7 fitted to vehicle 1.

In the first configuration of member 26, panels 13 may be folded one on top of another (not shown) or laid flat in one plane (Figure 2). In a variation (not shown), panels 13 are joined by hinges partly embedded in panels 13.

As shown in Figure 4, panels 13 are fixed to one another, to floor 8 and/or to vertical wall 4 by means of connecting devices 28 comprising a number of L-shaped brackets 29, which are concealed inside compartment 10, and each of which comprises a first tab 30 embedded in a fixed position inside a plate 20 (or between plate 20 and relative covering 21 in a manner not shown), and a second tab 31 fixed by means of screws to the adjacent panel 13. In a variation not shown, devices 28 may comprise fastening teeth formed in one piece with plates 20, and which fit inside respective seats to click panels 13 together.

With reference to Figure 1, seat portion 11 of bench 7 defines a top opening 32 for access to storage compartment 10, and which is closed by a hatch 33 forming part of seat portion 11 and having a lock. Hatch 33 is preferably covered with sheet 24 so as to be hinged to the rest of the seat portion by a flexible portion of sheet 24.

Bench 7 therefore comprises a very small number of parts, by panels 13 being joined to form a single member 26, and by brackets 29 preferably being fitted integrally to panels 13. Since panels 13 are joined together but movable with respect to one another, member 26 is extremely easy to transport, set up and fix in position on vehicle 1. Moreover, co-molding plates 20 onto a single sheet 24 enables bench 7 to be produced relatively cheaply and with a highly attractive surface 22.

Clearly, changes may be made to bench 7 as described and illustrated herein without, however, departing from the scope of the present invention. In particular, panels 13 may be shaped and sized differently from those shown, and/or may comprise recesses, strengthening ribs and/or fastening appendixes. The bench may be defined by a different number of panels, in particular a different number of uprights, and/or may define at least part of a table top, as opposed to seat portion 11 or bunk surface 9.

## Claims

1. A bench (7) for a vehicle (1), in particular an industrial vehicle; the bench comprising a supporting surface (11), and at least two uprights (12) for supporting said supporting surface (11) off a floor (8) of said vehicle (1); and said supporting surface (11) and said uprights (12) being defined by respective panels (13), each having at least one edge (14) placed alongside the edge (14) of an adjacent panel (13) to define an edge of said bench (7); **characterized in that** each said panel (13) is joined to said adjacent panel (13) by relatively mobile means (25) for setting said panels (13) to a first functional configuration (26), in which they lie at least partly in respective parallel planes, and to a second functional configuration (7), in which they lie in respective transverse planes to define the assembled said bench.

2. A bench as claimed in Claim 1, **characterized in that** said relatively mobile means (25) comprise hinge means (25) enabling each pair of adjacent said panels (13) to rotate with respect to each other about a hinge axis (27) extending along said edges (14) placed alongside each other.

3. A bench as claimed in Claim 2, **characterized in that** said hinge means (25) are integral with said panels (13).

4. A bench as claimed in Claim 2 or 3, **characterized in that** each said panel (13) comprises a relative plate (20), and a relative layer (21) at least partly covering said plate (20); the layers (21) of each pair of adjacent said panels (13) forming part of a single sheet (24) comprising an intermediate flexible portion (25) between the adjacent said panels (13) and defining said hinge means.

5. A bench as claimed in Claim 4, **characterized in that** said plates (20) are co-molded to said sheet (24).

6. A bench as claimed in Claim 4 or 5, **characterized in that** each said plate (20) is made of self-supporting polypropylene foam.

7. A bench as claimed in Claim 4 or 5, **characterized in that** each said plate (20) is made of self-supporting rigid polyurethane foam.

8. A bench as claimed in Claim 4 or 5, **characterized in that** each said plate (20) is made of injection molded plastic material.

9. A bench as claimed in any one of Claims 4 to 8, **characterized in that** said sheet (24) defines an outer surface (22) of said bench (7).

10. A bench as claimed in Claim 9, **characterized in that** said sheet (24) is made of carpet-like material.

11. A bench as claimed in any one of the foregoing Claims, **characterized by** comprising connecting means (28) for connecting said panels (13) integrally to one another and to said vehicle (1); said connecting means (28) being at least partly embedded in said panels (13).
